Europäisches Patentamt

European Patent Office

Office européen des brevets

(19)

(11) Publication number: 0 254 972
A2

# EUROPEAN PATENT APPLICATION

(21) Application number: 87110268.7

(22) Date of filing: 16.07.87

(51) Int. Cl.4: B60Q 1/26

(30) Priority: 24.07.86 IT 2263886 U

(43) Date of publication of application:
03.02.88 Bulletin 88/05

(84) Designated Contracting States:
AT BE CH DE ES FR GB GR LI LU NL SE

(71) Applicant: SACEX S.p.A.
Corso Europa 12
I-20122 Milano(IT)

(72) Inventor: Bellu, Mario
Via Parini 23
I-20038 Seregno (Milano)(IT)

(74) Representative: Modiano, Guido et al
MODIANO, JOSIF, PISANTY & STAUB
Modiano & Associati Via Meravigli, 16
I-20123 Milan(IT)

(54) Rotating beacon, particularly for motor vehicles.

(57) This rotating beacon, particularly for motor vehicles comprises a base body (2) which can be coupled to a motor vehicle and is associated, through elastic joints (21), with a base plate (20) supporting a motor (30) and a lamp-holder (41) provided with a stem (40) which can be arranged axially in said base plate. The beacon further comprises a toothed wheel (43) rotatable about the stem, meshing with a small pinion (31) which is keyed on the shaft (32) of said motor (30), and supporting a parabola (50) which can move orbitally around a light-bulb (46) to be mounted on said lamp-holder.

Fig.1

## ROTATING BEACON, PARTICULARLY FOR MOTOR VEHICLES

The present invention relates to a rotating beacon particularly for motor vehicles.

As is known, in public-service vehicles, such as for example ambulances, road assistance vehicles, fire trucks, and the like, as well as in other types of vehicle, so-called rotating beacons are used wherein the light beam is made to rotate in a cyclic manner, employing a parabolic element which moves around a fixed light.

In known solutions, an extremely diversified production is currently available according to the type of coupling of the beacon to the vehicle. In fact, nowadays it is possible to apply the rotating beacon by connecting it directly to the bodywork or possibly to a sleeve conveniently provided on the vehicle to support the rotating beacon; this fact currently causes diversification in production, since a rotating beacon with a coupling which can be defined universal is not available.

Another disadvantage found in the solutions of the prior art furthermore resides in the fact that the assembly of the various component elements is extremely complicated and that any replacement of damaged parts is currently virtually impossible.

The aim of the present invention is indeed to eliminate the disadvantages described above, by providing a rotating beacon, particularly for motor vehicles, which can be coupled to the vehicle in various manners, without thereby having to modify component parts of said beacon, thus contributing to a standardization of production.

Within the scope of the above described aim, a particular object of the present invention is to provide a rotating beacon which can be assembled in a very rapid and simple manner, being composed of a limited number of components which are easily associable with one another.

Still another object of the present invention is to provide a rotating beacon which, by virtue of its peculiar constructive characteristics, is capable of giving the greatest assurances of reliability and safety in use.

Not least object of the present invention is to provide a rotating beacon which can be easily obtained starting from elements and materials commonly available on the market, and which is furthermore competitive from a merely economical point of view.

The above described aim, as well as the objects mentioned and others which will become apparent hereinafter, are achieved by a rotating beacon, particularly for motor vehicles, characterized in that it comprises a base body which can be coupled to a motor vehicle, said base body being associated, through elastic joints, with a base plate supporting a motor and a lamp-holder provided with a stem which can be arranged axially in said base plate, said beacon further comprising a toothed wheel rotatable about said stem, meshing with a small pinion which is keyed on the shaft of said motor, and supporting a parabola which can move orbitally around a light-bulb to be mounted on said lamp-holder.

Further characteristics and advantages of the invention will become apparent from the detailed description of a rotating beacon particularly for motor vehicles, illustrated only by way of non-limitative example in the accompanying drawings, wherein:

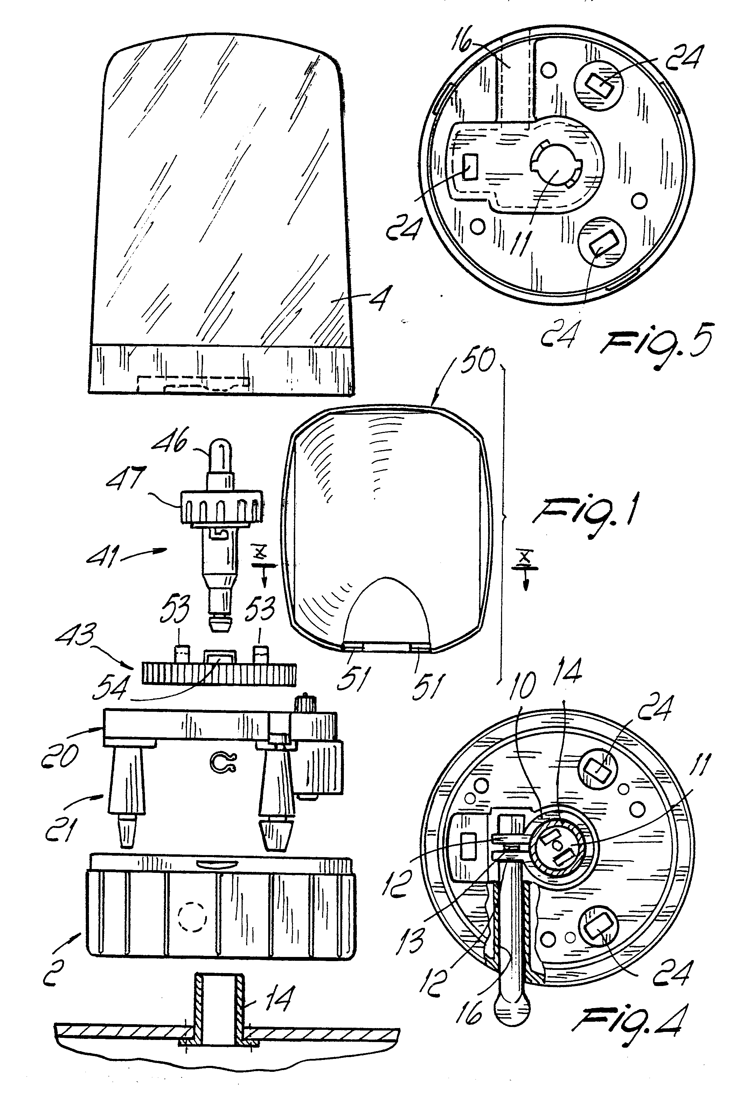

Figure 1 is a schematic exploded view of the structure of the rotating beacon, according to the invention;

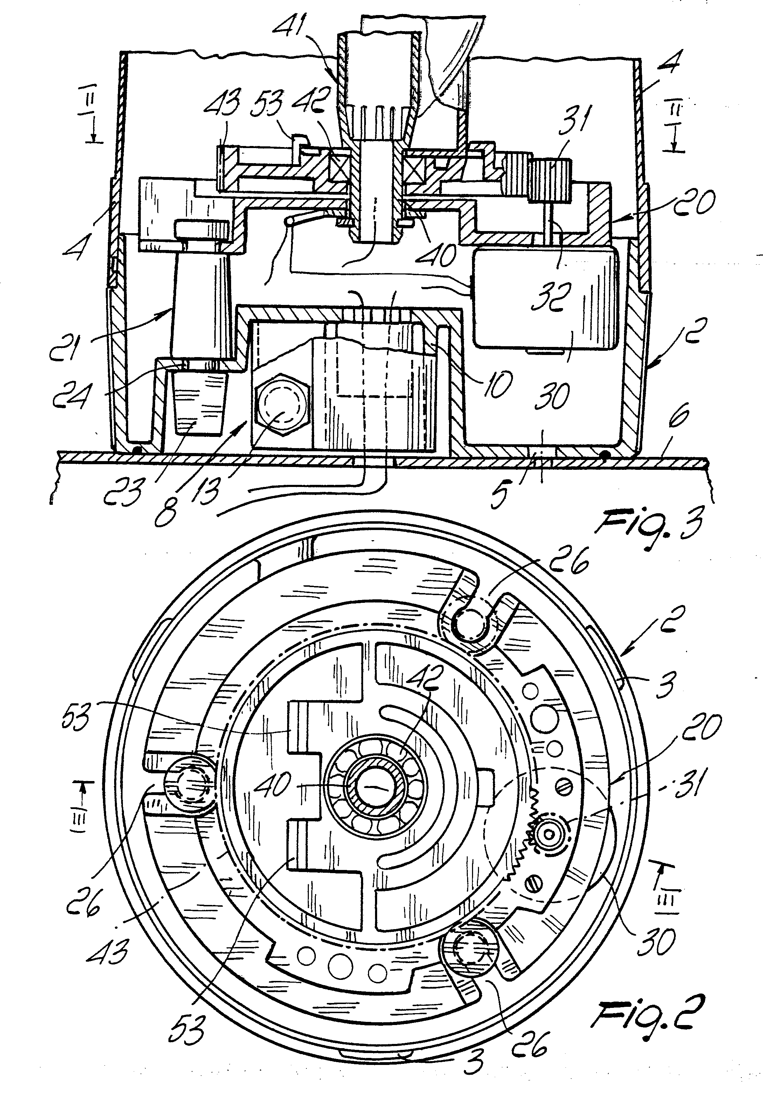

Figure 2 is a cross section view of the base body, taken along line II-II of figure 3;

Figure 3 is a cross section view taken along line III-III of figure 2;

Figure 4 is a bottom plan view of the base body in partial cross section;

Figure 5 is a top plan view of the base body;

Figure 6 is a perspective view of an elastic joint;

Figure 7 is a view of a lamp-holder in axial cross section;

Figure 8 is a top plan view of the lamp-holder;

Figure 9 is a diametral cross section view of the toothed wheel;

Figure 10 is a cross section view of the parabola, taken along the line X-X of figure 1;

Figure 11 is a diametral cross section view of the supporting plate which can be applied below the base body; and

Figure 12 is an elevation view of the rotating beacon with the supporting plate.

With reference to the above described figures, the rotating beacon, particularly for motor vehicles, generally indicated by the reference numeral 1, comprises a base body 2, which advantageously has an upwardly open cylindrical configuration provided with bayonet couplings 3 for the application of an optically transparent dome 4.

The base body 2 is provided, on its inner bottom, with through holes 5 which allow the direct application of said base body to the bodywork 6 of a motor vehicle.

The base body 5, at its bottom, defines a recessed portion 8 which is open onto the outer part of said base body and accommodates an outwardly projecting clamp element 10 which extends circumferentially around an axial opening 11 of said base body and ends with two substantially radial, mutually parallel arms 12 which may be locked together through a locking bolt 13 which is manually operable to allow, if required, fixing of the base body to the coupling sleeve 14 which can be provided on the motor vehicle.

The base body 2 defines a through channel 16, arranged along a line intersecting the circular configuration of said base body, to allow access of a tool to tighten the bolt which, by moving the arms 12 closer to one another, causes tightening of the clamp 10 on the sleeve 14 and consequent fixing of the rotating beacon to the motor vehicle.

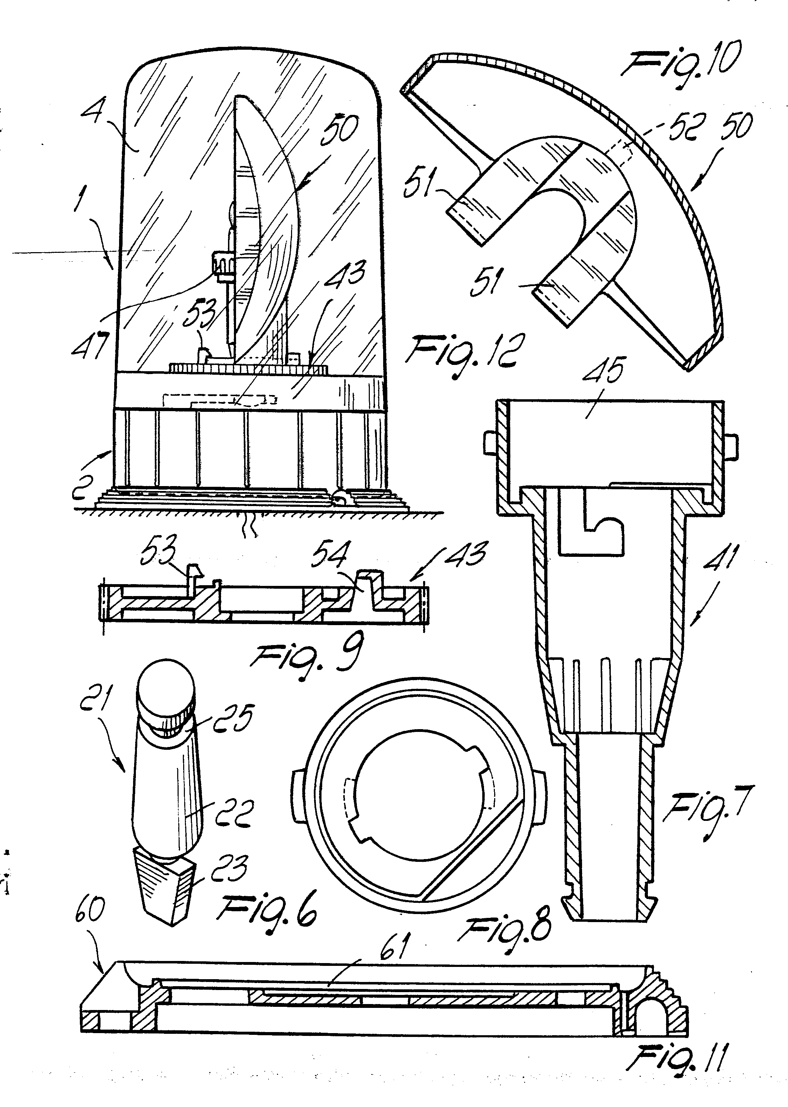

The base body 2 supports a base plate 20 which is connected thereto by means of elastic joints 21 consisting (see fig. 6) of an elongated body 22 of elastic material such as rubber or the like which at one of its ends is provided with a flattened part 23 which can be inserted in rectangular slots 24 defined by the base body and having such dimensions as to allow the insertion of the flattened part 23 and its locking by means of a rotation through 90°.

At the other end, the body 22 is provided with a groove 25 which couples with a fork-like portion 26 defined by the base body, so as to perform coupling between said base plate 20 and the base body 2.

The base plate 20 supports an electric motor 30 which is accommodated in the region delimited by the base body 2 and is provided with a small pinion 31 keyed on its shaft 32 protruding from the upper part of the base plate.

The stem 40 of a lamp-holder, generally indicated at 41, is arranged axially in the base plate.

A toothed wheel 43 is rotatably supported by the stem 40 through a ball bearing 42 and meshes with the small pinion 31 so as to be rotated about the stem 40.

The toothed wheel 43 supports a parabola 50 which is provided with a coupling consisting of two front feet 51 and of one rear tooth 52, respectively engageable with elastic teeth 53 defined by the toothed wheel and a recess 54, also defined by the toothed wheel so as to allow the application of the parabola to the toothed wheel.

The feet 51 are arranged as a fork substantially around the axis defined by the stem 40.

The lamp-holder 41 upwardly defines a cup-like portion 45 for accommodation of a light bulb 46 of any type, which is retained by an ordinary collar 47 applicable with a bayonet coupling (see fig. 8).

The parabola 50 is movable with an orbital motion around the bulb, so as to create a rotating light beam according to the intended aims.

The beacon is furthermore completed by a supporting plate, indicated at 60 in figure 11, which upwardly defines a recess 61 accommodating the lower part of the base body 2, thus allowing mounting of the rotating beacon onto the motor vehicle with the supporting plate 60 interposed and acting in practice as a pedestal or finishing element.

From what has been described, it is thus apparent that the invention achieves the intended aims, and in particular the fact is stressed that a rotating beacon is provided which offers a wide range of possibilities of coupling to the motor vehicle, without thereby requiring modifications of the constructive details, since the base body is already structured so as to allow its direct fixing to the motor vehicle by means of screws or the like, or possibly its connection to the sleeve provided on the motor vehicle, employing the clamp which is provided monolithically with the base body.

Another important object of the invention furthermore resides in the fact that the parabola is easily applicable to the toothed wheel without thereby requiring couplings which are difficult to produce.

It should be furthermore added that with the structure described it is possible to change the type of light-bulb employed simply by modifying the configuration of the lamp-holder being used.

Another important aspect furthermore resides in the fact that the motor supporting plate is connected to the beacon with the interposition of elastic joints, which have the function of cushioning any vibrations which may lead to damage both the motor and the lamp.

In practice, the materials employed, so long as compatible with the specific use, as well as the dimensions and the contingent shapes, may be any according to the requirements.

## Claims

1. A rotating beacon, particularly for motor vehicles, characterized in that it comprises a base body (2) which can be coupled to a motor vehicle, said base body being associated, through elastic joints (21), with a base plate (20) supporting a motor (30) and a lamp-holder (41) provided with a stem (40) which can be arranged axially in said base plate, said beacon further comprising a toothed wheel (43) rotatable about said stem, meshing with a small pinion (31) which is keyed on the shaft (32) of said motor (30), and supporting a parabola (50) which can move orbitally around a light-bulb (46) to be mounted on said lamp-holder.

2. A rotating beacon, according to claim 1, characterized in that said base body (2) is provided, at its bottom, with through holes (5) for the passage of means for fixing said rotating beacon (1) to a motor vehicle (6).

3. A rotating beacon, according to the preceding claims, characterized in that said base body (2) is provided, on the outer face of the bottom, with a recessed portion (8) rigidly accommodating a clamp (10) which surrounds an axial opening (11), said clamp ending in two mutually facing arms (12) extending in a substantially radial direction, a bolt (13) being furthermore provided for mutually locking said arms and clamping said rotating beacon (1) to a sleeve (14) projecting from a motor vehicle (6).

4. A rotating beacon, according to one or more of the preceding claims, characterized in that said elastic joints (21) have an elongated body (22) which downwardly defines a flattened tapering portioon (23) which is insertable in rectangular ports (24) defined in recessed regions of said base body (2), said flattened tapering portion (23) being rotatable to lock said elastic joint with respect to said base body, said elastic joints being provided at the other end thereof, with a groove (25) which is insertable in fork-like regions (26) defined by said base plate (20).

5. A rotating beacon, according to one or more of the preceding claims, characterized in that said toothed wheel (43) is connected to said stem (40) with the interposition of a ball bearing (42).

6. A rotating beacon, according to one or more of the preceding claims, characterized in that said parabola (50) is coupled to said toothed wheel (43) by means of snap means (51,53).

7. A rotating beacon, according to one or more of the preceding claims, characterized in that said snap means comprises a pair of feet (51) defined by said parabola (50) in the front region thereof and engageable with elastic teeth (53) defined by said toothed wheel (43), in the rear region said parabola (50) being provided with a tooth (52) which is insertable in a recess (54) correspondingly provided on said toothed wheel at a portion thereof opposite to said elastic feet with respect to the wheel centre.

8. A rotating beacon, according to one or more of the preceding claims, characterized in that it comprises a base plate (60) which is insertable below said base body (2) and defines a recess (61) for the accommodation of the bottom of said base body.

0 254 972

Fig.5

Fig.1

Fig.4

0 254 972

Fig. 3

Fig. 2

Fig. 10

Fig. 12

Fig. 9

Fig. 7

Fig. 6

Fig. 8

Fig. 11